# EUROPÄISCHE PATENTSCHRIFT

(11) **EP 3 353 392 B1**
(45) Veröffentlichungstag und Bekanntmachung des Hinweises auf die Patenterteilung: **24.02.2021**
(21) Anmeldenummer: 16742329.2
(22) Anmeldetag: 27.07.2016
(51) Int. Cl.: F01L 3/14

(54) **VENTIL FÜR VERBRENNUNGSMOTOREN MIT LEITSCHAUFEL FÜR KÜHLMITTEL**
VALVE FOR INTERNAL COMBUSTION ENGINES HAVING A GUIDE VANE FOR COOLANT
SOUPAPE DESTINÉE À DES MOTEURS À COMBUSTION INTERNE, POURVUE D'UNE AUBE DIRECTRICE POUR UN AGENT DE REFROIDISSEMENT

(30) Priorität: 22.09.2015 DE 102015116009
(43) Veröffentlichungstag der Anmeldung: 01.08.2018
(73) Patentinhaber: Federal-Mogul Valvetrain GmbH, 30890 Barsinghausen (DE)
(72) Erfinder: SCHOBER, Dirk, 31311 Uetze (DE); KELLERMANN, Stefan, 30890 Barsinghausen (DE); BAYARD, Guido, 44369 Dortmund (DE)
(74) Vertreter: Becker & Kurig Partnerschaft Patentanwälte PartmbB
(86) Internationale Anmeldenummer: PCT/EP2016/067854
(87) Internationale Veröffentlichungsnummer: WO 2017/050468

(56) Entgegenhaltungen:
- WO-A1-2014/147759
- WO-A1-2014/167694
- DE-A1- 10 057 192
- DE-B- 1 030 102
- US-A- 1 834 836
- US-A- 2 218 983

## Beschreibung

Die vorliegende Erfindung betrifft gekühlte Ventile für Verbrennungsmotoren. Spezieller betrifft die vorliegende Erfindung ein natriumgekühltes Ein- oder Auslassventil für einen Verbrennungsmotor, das mit Leitschaufeln versehen ist, um die Bewegung der Natriumfüllung innerhalb des Ventils zu steuern bzw. zu beeinflussen.

Innengekühlte bzw. natriumgekühlte Abgasventile sind spätestens seit 1935 bekannt Die Dokumente DE 100 57 192 A1, US 2 218 983 A und WO 2014/167694 A1 offenbaren solche innengekühlten Ventile.

Natriumkühlung und deren Effekte sind im Stand der Technik wohlbekannt, und die technischen Weiterentwicklungen der letzten Jahre betrafen hauptsächlich ein vergrößertes Kühlmittelvolumen im Bereich des Ventiltellers und vereinfachte Herstellungsverfahren, um natriumgekühlte Ventile kostengünstiger herstellen zu können.

Es besteht jedoch immer noch ein Bedarf die Kühlung bzw. die Kühleigenschaften insbesondere von Abgasventilen weiter zu verbessern. Es besteht zudem ein Bedarf ein maximal gekühltes Hohlraumventil zur Verfügung zu haben, dass auch bei höchstmöglichen Abgastemperaturen noch sicher funktioniert.

Gemäß der vorliegenden Erfindung wird ein gekühltes bzw. innengekühltes Ventil bzw. Ein- oder Auslassventil für Verbrennungsmotoren bereitgestellt, das einen Ventilteller, einen Ventilschaft, sowie einen Hohlraum innerhalb des Ventilschafts und des Ventiltellers umfasst. Das Ventil ist zudem mit einem Kühlmittel versehen, das in dem Hohlraum angeordnet ist. Der Hohlraum ist mit mindestens einer Leitschaufel für das Kühlmittel ausgestattet. Das Kühlmittel füllt den Hohlraum nur teilweise und kann sich innerhalb des Hohlraums bewegen. Die Leitschaufel ist dabei so angeordnet, dass es eine Auf- und Abbewegung des Kühlmittels in einer Axialrichtung des Ventils in eine Drehbewegung um die Achse des Ventils verwandelt. Die Achse des Ventils entspricht der Symmetrieachse der Außenkontur des Ventils.

Die vorliegende Erfindung betrifft somit ein Hohlraumventil mit Leit- bzw. Verwirbelungsschaufeln, die in dem Hohlraum angebracht sind, um einen maximalen Wärmeübertrag zwischen dem Material des Ventils, bzw. des Ventiltellers und einer Kühlmittel- bzw. Natriumfüllung zu erreichen.

Die vorliegende Erfindung basiert einerseits auf einer Vergrößerung der inneren Hohlraumoberfläche sowie einer Verwirbelung bzw. dem Erzeugen einer Kreisströmung in der flüssigen Kühlmittel- bzw. Natriumfüllung.

Bei einer beispielhaften Ausführungsform der vorliegenden Erfindung wird als Kühlmittel Natrium verwendet. Es können jedoch auch andere Erdalkalimetalle oder Legierungen mit hinreichend geringem Schmelzpunkt verwendet werden.

Eine weitere beispielhafte Ausführungsform des Ventils ist mindestens zweiteilig und weist an der Ventiltellerfläche eine Öffnung auf, die mit einem Deckel verschlossen ist. Der Deckel ist durch Fügen mit der Ventiltellerfläche verbunden. Der Deckel kann durch Laserschweißen, Elektronenstrahlschweißen, Widerstandsschweißen oder Reibschweißen materialschlüssig mit dem Teller verbunden werden.

Bei einer weiteren beispielhaften Ausführungsform der vorliegenden Erfindung ist der Deckel mit mindestens einer Leitschaufel für das Kühlmittel versehen. Die mindestens eine Leitschaufel wird dann innen an dem Deckel angebracht und befindet sich nach der Montage in dem Hohlraum des Ventilkörpers. Die mindestens eine Leitschaufel ist so ausgeformt, dass ein aus dem hohlen Schaft fließendes Kühlmittel in eine Drehung um die Ventilachse geleitet wird. Dies kann durch schiefe Ebenen erzielt werden die tangential verlaufen. Es werden bevorzugt 2 oder mehr Leitschaufeln verwendet, um eine Drehsymmetrie von kleiner gleich 180° zu erreichen, wodurch ein symmetrischer Aufbau des Ventils möglich ist.

Ein Hohlraumventil bzw. ein innengekühltes Ventil mit hohlem Schaft und hohlem Ventilkopf ist in dieser Ausführungsform so ausgeführt, dass auf der Ventilstirnfläche des Hohlraums drehsymmetrische Verwirbelungs- bzw. Leitschaufeln angebracht sind. Die Anzahl der Schaufelblätter bzw. Leitschaufeln beträgt mindestens eines bzw. eine. Die Leitschaufeln können aus Ventilstahl und einstückig mit der Ventilstirnfläche des Hohlraums ausgeführt sein. Die Leitschaufeln können entlang der Ventilachse miteinander verbunden sein. Die Leitschaufeln können im Bereich der Ventilachse eine größte Höhe aufweisen und in Radialrichtung nach außen in der Höhe abfallen. Die Leitschaufeln können in Radialrichtung nach außen gekrümmt sein, um die verflüssigte Natriumfüllung in eine Drallbewegung bzw. eine Rotationsströmung zu versetzen. Die Anordnung der Leitschaufeln kann turbinenartig ausgeführt werden, wobei insbesondere eine Ähnlichkeit zu Radialverdichtern von Turbinen besteht.

Die Leitschaufeln sollen eine gezielte Bewegung der bei Betriebstemperatur flüssigen Natriumfüllung bewirken, wobei das Natrium bei jedem Ventilhub eine vergrößerte innere Ventiloberfläche überströmt, und so bei jedem Ventilhub einer größeren inneren Ventiloberfläche eine höhere Wärmemenge entziehen kann.

Idealerweise sollte der an der Ventiltellerfläche eingeschweißte Deckel samt der daran befindlichen Leitschaufeln so ausgeführt sein, dass er durch herkömmliche Verfahren geschmiedet werden kann, um die Herstellungskosten und damit die Ventilkosten so gering wie möglich zu halten.

Bei einer weiteren beispielhaften Ausführung der vorliegenden Erfindung umfasst der Deckel mindestens zwei Leitschaufeln, die sich symmetrisch und spiralförmig von einer Mitte des Deckels nach außen erstrecken. Die Symmetrie ist hier als Drehsymmetrie bzw. einem Punkt, bzw. Achsensymmetrie gegenüber der Längsachse des Ventils zu verstehen. Der Begriff Achsensymmetrie ist hierbei so zu verstehen, dass in jeder Ebene senkrecht zu der Achse des Ventils eine Punktsymmetrie um den Schnittpunkt der Ebene mit der Achse des Ventils besteht. Die Anzahl der Leitschaufeln kann zwischen 2 und 12 betragen, wobei auch ungerade Zahlen möglich sind. Bei ungeraden Zahlen von Leitschaufeln besteht bevorzugt eine Dreh- nicht jedoch eine Punktsymmetrie. Die Leitschaufeln auf dem Deckel erzeugen nur bei einem herunterströmenden, d.h. in Richtung des Ventiltellers strömenden Kühlmitteles, eine Dreh- bzw. Rotationsströmung um die Ventilachse.

In einer zusätzlichen beispielhaften Ausführungsform des Ventils der vorliegenden Erfindung umfasst der Deckel in der Mitte eine pyramidenförmige oder kegelförmige Struktur, um das Kühlmittel auf die Leitschaufeln zu leiten. Es ist ebenfalls vorgesehen eine kegelartige Struktur zu verwenden, die eine zweidimensional gewölbte Fläche wie ein Flammscher Paraboloid aufweist. Eine Struktur mit einer Fläche ähnlich einem Flamm'schen Paraboloiden kann eine Belastung für eine Fügestelle des Deckels beim Auftreffen des Natriums verringern, und so die Lebensdauer des Ventil erhöhen. Der Flamm'sche Paraboloid ist nur ein Sonderfall eines parabolischen Kegels, der hier auch eingesetzt werden kann, um zu verhindern, ein nach unten strömendes Natrium einen großen Impuls auf den Deckel und damit auf eine Fügestelle des Deckels ausübt.

Bei einer weiteren beispielhaften Ausführungsform des Ventils weist die Leitschaufel einen dreieckigen Querschnitt auf. Je nach Ausführung des dreieckigen Querschnitts können die Leitschaufeln von einer Seite wie eine Rampe geformt sein, und von der anderen Seite wie eine Wand, sodass eine Kreisströmung in einer Richtung bevorzugt wird. Ein in einer Rotationsströmung befindliches Natrium könnte dann über die Rampen weiterströmen, sodass die Leitschaufeln ein Weiterströmen des Kühlmittels nicht verhindern.

Je nach Ausführungsform können die Schaufeln in Bezug auf die Ventilachse geneigt sein, was jedoch einen erhöhten Fertigungsaufwand erfordert.

In einer zusätzlichen beispielhaften Ausführungsform der vorliegenden Erfindung verläuft eine Seite der mindestens einen Leitschaufel senkrecht zu der Tellerfläche. Es kann ebenfalls vorgesehen sein, dass die Leitschaufeln insgesamt geneigt sind, um eine Rotationsströmung besser erzeugen zu können.

Bei einer weiteren Ausführungsform der vorliegenden Erfindung, verläuft die mindestens eine Leitschaufel wendelförmig in dem Schaft. Diese Ausführung nutzt den relativ langen hohlen Schaft des Ventils um hier ebenfalls eine Rotations- bzw. Zirkular-Strömung zu erzeugen. Dabei bilden die Leitschaufeln einen oder mehrere lange Wendel in dem Schaft. Die Leitschaufeln sind in dieser Ausführung ähnlich den Zügen in einem Lauf einer Schusswaffe geformt. Diese Art der Zug- Leitschaufel eignet sich besonders in Verbindung mit einer Leitschaufel-Ausführung, die eine rampenartige Seite umfasst, die es gestattet dass die Kreisströmung aufrecht erhalten bleibt, selbst wenn das Ventil in einer geschossenen Lage ruht. Es ist möglich ein Rohr als Schaft zu verwenden, aus dem durch eine Räumnadel die Leitschaufeln herausgearbeitet werden. So können ohne großen Aufwand eine oder mehrere Leitschaufeln auf der Innenseite des Ventilschafts bereitgestellt werden, ohne dass dafür neue Technologien entwickelt werden müssten.

Bei einer anderen beispielhaften Ausführungsform der vorliegenden Erfindung weist die mindestens eine wendelförmige Leitschaufel einen dreieckigen Querschnitt auf. Der dreieckige Querschnitt gestattet es, bei einem sehr flachen dreieckigen Querschnitt, dass das flüssige Natrium nur bei einer Aufwärts- oder Abwärtsbewegung in Rotation versetzt wird. Bei einer entgegengesetzten Bewegung kann das Natrium über eine flache Rampe, die eine Rückseite der Leitschaufel bildet, über diese hinweggleiten, ohne das die Rotationsbewegung gestoppt oder eine entgegengesetzte Rotationsbewegung erzeugt wird. So kann bei hohen Drehzahlen eine konstante Rotationsströmung des Kühlmittels innerhalb des Hohlraums des Ventils bzw. innerhalb des Ventilschafts erzeugt werden.

Bei einer weiteren beispielhaften Ausführungsform der vorliegenden Erfindung, weist eine Seitenfläche der mindestens einen wendelförmigen Leitschaufel, eine mindestens 6-mal größere Fläche auf, als eine andere Seite der mindestens einen wendelförmigen Leitschaufel. Dieser Anspruch bezieht sich auf eine Leitschaufel mit einer sehr flachen und einer sehr steilen Seite. Diese Ausführung kann so ausgeführt werden, dass sich die Rückseite der Schaufel um den halben oder den gesamten Innenumfang erstreckt. Eine Solche Schaufel weist eine im Querschnitt spiralförmige Rückseite auf.

Bei einer weiteren beispielhaften Ausführungsform der vorliegenden Erfindung, ist der Ventilschaft mehrteilig ausgeführt, wobei mindestens ein Teil des Ventilschafts eine Durchgangsöffnung aufweist. Diese Konstruktion gestattet es insbesondere eine wendelförmige Leitschaufel in dem Ventilschaft auszuformen, ohne dass dafür komplizierte Gussformen notwendig wären. Ein Ventilschaft-Teil, der ein Durchgangsloch aufweist, kann mit den gleichen Mitteln, mit denen Züge in Gewehrläufe eingebracht werden, geformt werden. Diese Ausführung gestattet es, mit herkömmlichen Technologien wendelförmige Leitschaufeln in den Ventilschaft einzubringen.

Bei einer weiteren Ausführungsform der vorliegenden Erfindung, wird ein innengekühltes Ventil für Verbrennungsmotoren bereitgestellt, bei dem der Deckel zusätzlich mit mindestens einer Entlastungsnut versehen ist, die eine Fügestelle zwischen der Öffnung der Ventiltellerfläche und dem Deckel entlastet. Die Entlastungsnut verläuft in der Nähe der Fügestelle innen und/oder außen an dem Deckel. Die Entlastungsnut verringert die Materialstärke des Deckels und verleiht ihm eine größere Elastizität, was wiederum die Belastung der Fügestelle zwischen Deckel und Ventilteller verringert. Insgesamt kann ein durch die Leitschaufeln weniger biegeelastischer Deckel damit wieder elastischer ausgebildet werden, sodass bei einer Belastung des Deckels nur ein Teil der Kräfte direkt an die Fügestelle übertragen wird. Insgesamt kann durch die Nuten ein Teil der Belastung aufgenommen werden und dadurch eine Belastung der Fügestelle verringern und so die Gesamtlebensdauer des innengekühlten Ventils erhöht werden. Bevorzugt werden innen und außen jeweils zwei Entlastungsnuten verwendet, um eine maximale Elastizität des Deckels zu erzielen. Die Anordnung der Entlastungsnuten kann eine Art Wellung erzeugen, mit der eine elastische Verbindung zwischen der Mitte des Deckels und dem Rand des Deckels erzeugt werden kann. Durch die Entlastungsnuten wird bei einer Durchbiegung des Deckels nach innen oder außen die Fügestelle entlastet, wodurch ein Versagen der Fügestelle verzögert oder vermieden werden kann. Der Deckel und der Ventilteller können durch Laserschweißen, Elektronenschweißen, Widerstandsschweißen oder Reibschweißen gefügt werden. Ohne die Entlastungsnut würde eine Durchbiegung des Deckels entsprechend höhere Zugbelastungen an der Fügestelle erzeugen, die in etwa der Belastung eines zweiseitig eingespannten Trägers entspricht, wobei auch bei kleinen Verformungen große Zugspannungen an der Fügestelle auftreten können.

Im Folgenden wird die vorliegende Erfindung anhand von Darstellungen beispielhafter Ausführungsformen näher verdeutlicht. Die Figuren stellen lediglich schematische Darstellungen dar.
Figur 1 stellt ein herkömmliches innengekühltes Ventil dar.
Figur 2 zeigt ein erfindungsgemäßes innengekühltes Ventil mit Leitschaufeln für ein Kühlmittel, die auf dem Deckel angeordnet sind.
Figur 3 ist eine Darstellung eines erfindungsgemäßen innengekühlten Ventils mit Leitschaufeln für ein Kühlmittel, die in dem Schaft angeordnet sind.
Figur 4 zeigt eine Teil-Schnittansicht durch den Ventilteller von Figur 2.
Figur 4A stellt eine Aufsicht auf die Leitschaufeln des Deckels von Figur 4 dar.
Figur 4B ist eine Darstellung einer Teil-Schnittansicht des Deckels von Figur 4A.
Figur 5A zeigt eine Aufsicht auf die Leitschaufeln einer weiteren Ausführungsform eines Deckels.
Figur 5B stellt eine Teil-Schnittansicht des Deckels von Figur 5A dar.
Figur 6A ist eine Darstellung einer Aufsicht auf die Leitschaufeln einer weiteren Ausführungsform eines Deckels.
Figur 6B zeigt eine Teil-Schnittansicht des Deckels von Figur 6A.
Figuren 7A bis 7D stellen Ausführungsformen von Deckeln mit Entlastungsnuten dar.

Sowohl in der Beschreibung als auch in den Figuren werden gleiche oder ähnliche Bezugszeichen verwendet, um auf gleiche oder ähnliche Komponenten und Elemente Bezug zu nehmen. Um unnötige Längen in der Beschreibung zu vermeiden, werden Elemente die bereits in einer Figur beschrieben wurden, in weiteren Figuren nicht gesondert erwähnt.

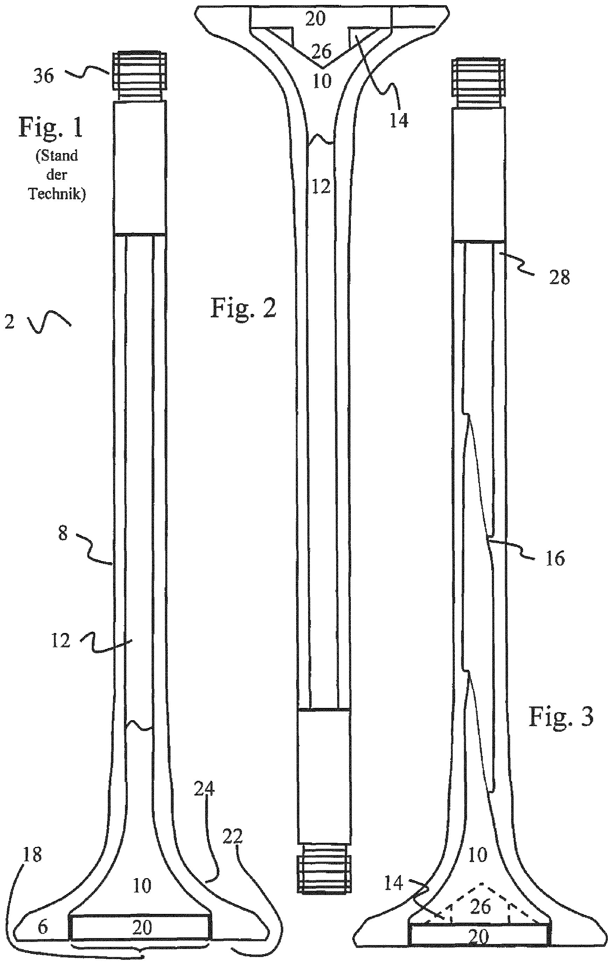

Figur 1 stellt ein herkömmliches innengekühltes Ventil 2 mit einem Ventilschaft 8 dar, der an einem unteren Ende in einem Ventilteller 6 ausläuft. Der Ventilschaft 8 endet oben am Schaftende 36, an dem das Ventil üblicherweise angesteuert wird. Innen ist das Ventil mit einem Hohlraum 10 versehen, der mit einem Kühlmittel 12 gefüllt ist. Als Kühlmittel wird üblicherweise Natrium verwendet, das bei Betriebstemperaturen des Verbrennungsmotors in einem flüssigen Zustand vorliegt. Üblicherweise ist nicht der gesamte Hohlraum sondern nur 2/3 bis 3/4 des Hohlraums des Ventils mit Natrium gefüllt. Im Betrieb bewegt sich das Natrium im Ventilschaft 8 bzw. im Hohlraum 10 des Ventilschafts 8 auf und ab und transportiert dabei Wärme von dem Ventilteller 6 in Richtung des gekühlten Ventilschafts 8 (Shaker-Kühlung). Das Natrium bewegt sich dabei bei jedem Öffnungs- bzw. Schließvorgang innerhalb des Ventils 2. Der Hohlraum 10 wurde bei dem Ventil 2 dadurch erzeugt, dass der Ventilteller 6 an der Ventiltellerfläche 22 mit einer Öffnung 18 versehen wurde. Durch die Öffnung 18 wurde der Hohlraum 10 in den Ventilteller 6 und den Ventilschaft 8 eingebracht. Es ist ebenfalls möglich den Hohlraum zumindest Teilweise auch von dem Ventilschaftende aus zu bohren und diesen Hohlraum durch ein beispielsweise durch Reibschweißen verbundenes Ventilschaftende zu verschließen. Das Natrium kann nach dem Einschweißen des Deckels durch eine Bohrung beispielsweise am Ventilschaft eingefüllt werden. Die Bohrung kann auch durch ein aufgesetztes und angeschweißtes Ventilschaftende verschlossen werden. Es ist jedoch ebenfalls möglich nach einem Einfüllen des Natrium-Kühlmittels 12 die Öffnung 18 durch einen Deckel 20 zu verschließen. Der Deckel wurde durch Laserschweißen, Elektronenstrahlschweißen oder Widerstandsschweißen mit dem Ventilteller gefügt. Die Ventilteller-Rückseite 24 und das obere Ende des Ventilschafts weisen bei dieser Ausführung keine Fügestellen auf, und der Ventilteller kann einstückig mit dem Ventilschaft hergestellt werden. Es ist zudem möglich den Ventilschaft und den Ventilteller bzw. den Ventilkopf durch eine Schweißnaht, beispielsweise durch Reibschweißen miteinander zu verbinden. Es ist jedoch ebenfalls möglich, den Hohlraum des Ventils durch den Schaft bzw. durch eine Bohrung in dem Ventilschaft zu füllen und diese dann zu verschließen. Es ist ebenfalls möglich den Deckel durch Reibschweißen an dem Ventilteller zu befestigen.

Figur 2 stellt ein erfindungsgemäßes innengekühltes Ventil 4 mit Leitschaufeln 14 für ein Kühlmittel 12 dar. Das Kühlmittel befindet sich wie in Figur 1 in einem Hohlraum 10. Der Deckel 20, der die Öffnung 18 verschließt, weist eine kegelförmige Struktur 26 auf. Die kegelförmige Struktur 26 dient dazu, ein sich von dem Schaft in Richtung des Ventiltellers 6 bewegendes Kühlmittel, in Richtung eines äußeren Radius umzuleiten. Die kegelförmige Struktur kann dabei einen Auftreff- / Aufschlagimpuls des Kühlmittels auf dem Deckel verringern, wodurch eine Fügestelle zwischen dem Deckel 20 und dem Ventilteller 6 entlastet wird, was zu einer erhöhten Einsatzdauer des Ventils beiträgt.

Am Rande der kegelförmigen Struktur 26 sind Leitschaufeln 14 angeordnet, die ein nach außen strömendes Kühlmittel in eine Rotationsströmung um eine Ventilachse (die durch die Mittel des Ventilschafts 8 verläuft) leiten. Dadurch soll ein besserer Wärmeübertrag zwischen dem Kühlmittel 12 und dem Ventilteller 6 erzielt werden. Sobald das Ventil wieder geschlossen wird, strömt das Kühlmittel 12 wieder in den Ventilschaft 8, wo es im Bereich der Ventilführung durch den Zylinderkopf gekühlt wird. Idealerweise bleibt die Rotationsströmung auch bei einer Bewegung des Kühlmittels in Richtung des Schaftendes bestehen, wodurch auch der Kühlvorgang im oberen Schaftbereich verbessert werden kann.

Figur 3 stellt ein erfindungsgemäßes innengekühltes Ventil mit Leitschaufeln für ein Kühlmittel in dem Schaft dar. Innen in dem hohlen Schaft ist eine umlaufende wendelförmige Leitschaufel 16 angebracht. Die Leitschaufel wirkt wie eine archimedische Schraube und versetzt ein nach unten strömendes Kühlmittel in eine Rotationsströmung, die um die Achse des Ventils verläuft. Die wendelförmige Leitschaufel weist eine steile Seite und eine flache Seite auf, sodass die wendelförmige Leitschaufel keine Auswirkungen auf ein in Richtung Schaftende strömendes Kühlmittel hat. Es ist ebenfalls vorgesehen zwei symmetrisch angeordnete Leitschaufeln zu verwenden, um einen symmetrisch aufgebauten Schaft zu erzeugen.

Es ist ebenfalls möglich die wendelförmigen Leitschaufeln so auszuführen, dass ein, in Richtung des Schaftendes strömendes Kühlmittel, in eine Dreh- bzw. Rotationsströmung versetzt wird. In diesem Fall sollte eine Leitschaufelgeometrie gewählt werden, die ein nach unten strömendes Kühlmittel möglichst wenig beeinflusst.

In der dargestellten Ausführungsform sind durchgestrichelte Linien angedeutet. Die wendelförmige Leitschaufel kann ebenfalls mit einem Deckel kombiniert werden, der eine kegelförmige Struktur 26 und/oder weitere Leitschaufeln 14 umfasst. In dieser Ausführung kann die Rotationsströmung des Kühlmittels sowohl bei einer Auf- als auch bei einer Abwärtsbewegung erzeugt bzw. aufrechterhalten werden.

Das in Figur 3 abgebildete Ventil umfasst einen zweiteiligen Schaft, wobei ein Teil 28 des Ventils mit einer Durchgangsöffnung 30 versehen ist, die bei dem fertigen Ventil den Hohlraum 10 bildet. Es ist bei einem Durchgangsloch besonders einfach die Innenseite des Schafts mit einer Leitschaufel zu versehen. Wenn ein Durchgangsloch vorliegt, kann beispielsweise durch eine Räumnadel eine Struktur in die Innenseite des Ventilschafts eingebracht werden, ohne dass dafür komplizierte Verfahrensschritte notwendig wären.

Es ist jedoch ebenfalls möglich, die Leitschaufeln durch Ziehen zu erzeugen, wobei ein sogenanntes Ziehmesser durch den Ventilschaft gezogen wird, wobei entweder der eingespannte Schaft oder eine Ziehstange mit dem Messer gedreht werden, um die wendelförmigen Windungen zu erzielen. Dabei sind mehrere Arbeitsschritte notwendig, bis durch das Ausspanen des Ventilschafts die Leitschaufel(n) eingebracht sind. Danach können die Leitschaufeln durch Läppen geglättet werden.

Es ist ebenfalls möglich die wendelförmigen Leitschaufeln durch Knopfziehen zu erzeugen. Beim Knopfziehen wird ein Metallstück, der sogenannte "Knopf", welches außenseitig das Inversprofil des Hohlraums bzw. die Leitschaufel trägt, durch den Ventilschaft gezogen. Es können mehrere Ziehschritte notwendig sein. Es kann ebenfalls notwendig sein, den Ventilschaft nach diesen Arbeitsgängen zu richten.

Es ist ebenfalls möglich, den Ventilschaft zu hämmern, wobei der Ventilschaftrohling mit einem größeren Durchgangsloch versehen wird, dessen Oberfläche zusätzlich gehont wird. Danach wird ein hochfester Dorn in den Ventilschaft eingebracht, der außen das Negativprofil der Leitschaufel(n) trägt. Außen angeordnete Schmiedehämmer verdichten das Material soweit, bis sich die Leitschaufel(n) im Inneren des Schaftes abgedrückt haben. Dabei entsteht eine exakte, glatte und widerstandsfähige Oberfläche im Innern, sodass keine Nachbearbeitung mehr erforderlich ist.

Nach dem Einbringen der wendelförmigen Leitschaufeln kann der Ventilschaft oben mit einem Teil, der das Schaftende bildet, und unten mit einem Deckel gemäß Figur 1 oder 2 verschlossen werden. Somit kann das Kühlmittel sowohl im Bereich des Ventiltellers, als auch im Bereich des Schaftes, in eine Rotationsströmung versetzt werden.

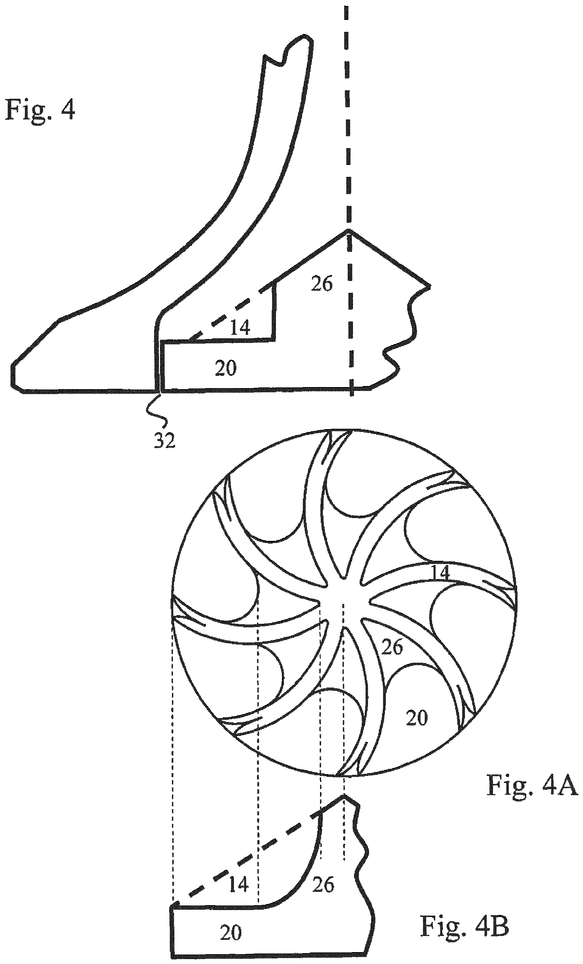

Figur 4 zeigt eine Teil-Schnittansicht durch den Ventilteller von Figur 2. Auf der linken Seite ist der Ventilteller im Schnitt zu erkennen. Der Deckel 20 bildet eine ebene Scheibe auf der sich eine konische Struktur 26 erhebt. Die konische Struktur 26 läuft in Richtung des Randes des Deckels 20 in Leitschaufeln 14 aus. Durch die Schnittansicht ist die konische Struktur 26 nicht klar von den Leitschaufeln 14 abgegrenzt.

Figur 4A zeigt eine Aufsicht auf die Leitschaufeln des Deckels von Figur 4. Es sind insgesamt acht Leitschaufeln 14 angeordnet, die von einem Zentrum nach außen verlaufen und dabei im Uhrzeigersinn gebogen sind. Ein von oben auf diese Struktur strömendes Fluid, wie beispielsweise flüssiges Natrium, wird durch diese Struktur in eine Dreh- bzw. Rotationsströmung im Uhrzeigersinn gedränt. Es ist ebenfalls möglich die Leitschaufeln jeweils in die andere Richtung entgegen dem Uhrzeigersinn auszurichten.

Figur 4B zeigt eine Teil-Schnittansicht des Deckels von Figur 4B. Entlang einer gebogenen Schnittlinie die genau zwischen zwei benachbarten Leitschaufeln 14 verläuft. Hier ist die Form der konischen Struktur besser zu erkennen, die ein von oben herabströmendes Natrium seitlich nach außen zum Rand des Ventiltellers bzw. des Deckels 20 leitet. Da die Leitschaufeln 14 gekrümmt sind, kann sich das Natrium nicht geradlinig nach außen bewegen, sondern wird durch die Leitschaufeln im Uhrzeigersinn abgelenkt, wodurch eine Kreis- bzw. Rotationsströmung entsteht, die den Kontakt des Kühlmittels mit der Innenseite des Hohlraums verbessern soll. Das Kühlmittel kann so nicht nur durch Wärmeleitung, sondern auch durch eine Bewegung des Kühlmittels Wärme transportieren, wodurch der Gesamtwärmetransport verbessert wird.

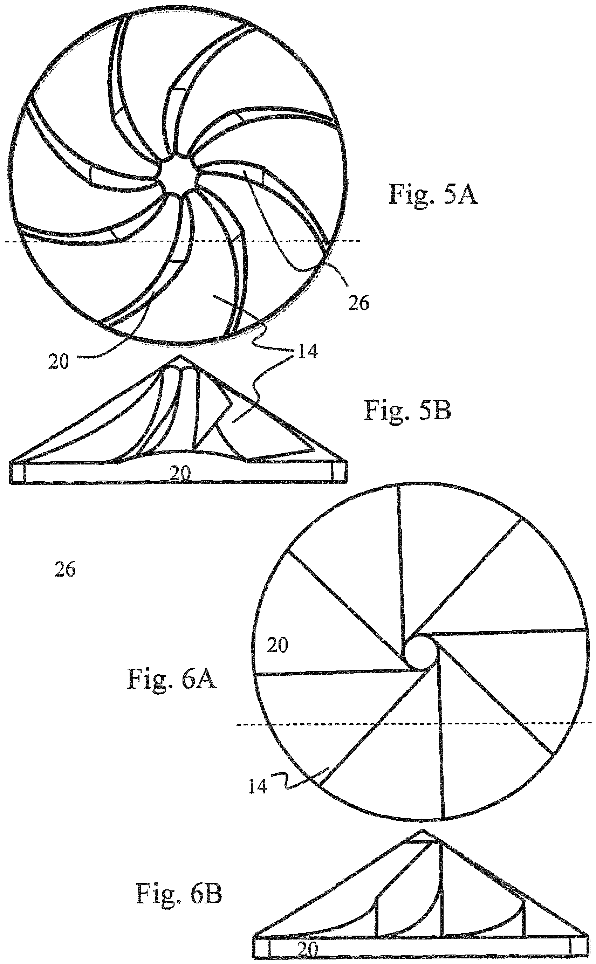

Figur 5A zeigt eine Aufsicht auf die Leitschaufeln einer weiteren Ausführungsform eines Deckels. Der Deckel von Figur 5A weist schrägstehende Leitschaufeln 14 auf, die ähnlich denen eines Turbo-Verdichterrades angeordnet sind. Je nach Schaufelform kann so eine stärkere Rotationsströmung erreicht werden.

Figur 5B zeigt eine Teil-Schnittansicht des Deckels von Figur 5A. In der Figur ist deutlich zu erkennen wie die Leitschaufeln geneigt sind, um die Rotationsströmung besser erzeugen zu können.

Figur 6A zeigt eine Aufsicht auf die Leitschaufeln einer weiteren Ausführungsform eines Deckels. In Figur 6A verlaufen die Leitschaufeln 14 im Wesentlichen in Radialrichtung. Die Rotationsströmung wird hier dadurch erreicht, dass eine Seite der Leitschaufeln 14 geneigt ist, um zu bewirken, dass ein in Radialrichtung nach außen strömendes Kühlmittel in eine Rotationsströmung im Uhrzeigersinn gedrängt wird. Diese Leitschaufelform und der dazugehörige Deckel können besonders einfach durch Gesenkschmieden hergestellt werden.

Figur 6B zeigt eine Teil-Schnittansicht des Deckels von Figur 6A, bei der die schrägen Seiten der Leitschaufeln am deutlichsten zu erkennen sind. Es ist ebenfalls möglich, die im Wesentlichen dreieckige Form der Leitschaufeln, mit einem gekrümmten Verlauf der Leitschaufeln 14 in Radialrichtung zu kombinieren.

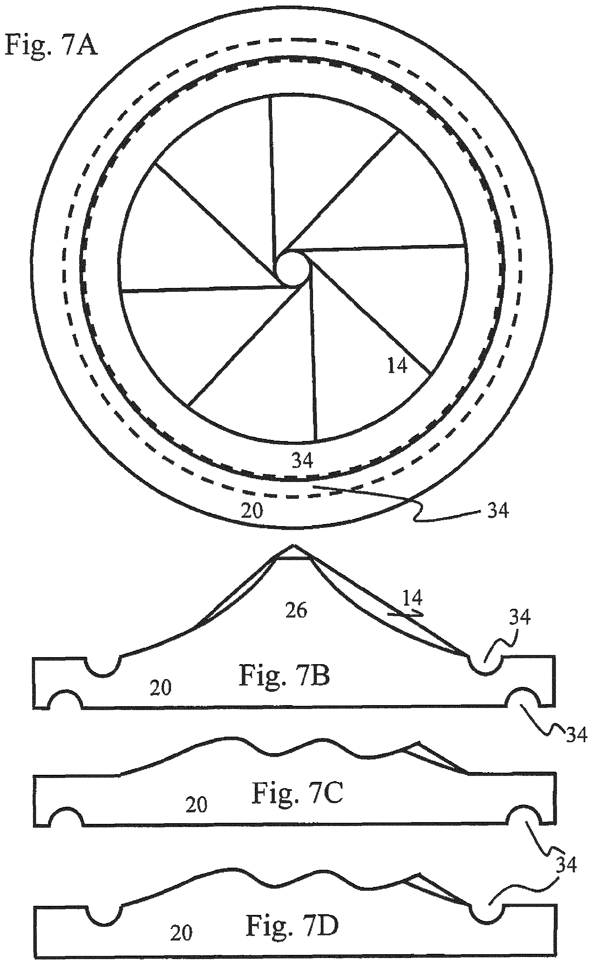

Figuren 7A bis 7D stellen Ausführungsformen von Deckeln mit Entlastungsnuten dar.

Figur 7A zeigt eine Aufsicht auf einen Deckel 20 mit Leitschaufeln gemäß Figur 6A bzw. 6B, in einer Aufsicht. In Figur 7A ist nur ein Teil des Deckels 20 mit den Leitschaufeln 14 versehen, und es ist um die Leitschaufeln 14 ein äußerer Rand gebildet. In dem Bereich sind zwei Entlastungsnuten 34 eingebracht, die jeweils an der Innenseite und an einer Außenseite angebracht sind. Die genaue Lage der Entlastungsnuten ist in Figur 7B deutlicher zu erkennen.

Figur 7B stellt eine Schnittansicht durch Figur 7A dar. In Figur 7B sind zwei Entlastungsnuten 34 an dem Deckel 20 vorgesehen. Eine Entlastungsnut befindet sich auf der Seite des Ventiltellers bzw. der Außenseite und eine Entlastungsnut 34 ist so angeordnet, dass sie in dem Hohlraum des innengekühlten Ventils liegt. Beide Entlastungsnuten 34 verringern die Materialstärke des Deckels im Bereich des Randes des Deckels 20. Durch die Entlastungsnuten kann sich der Deckel 20 leichter durchbiegen, auch wenn der Rand des Deckels durch eine Fügestelle festgelegt ist. Wenn sich der Deckel aufgrund eines Druckanstiegs im Brennraum oder aufgrund einer Temperaturdifferenz in dem Ventil leicht durchbiegt, wirken aufgrund des Hebelgesetzes viel größere Kräfte auf die Fügestelle zwischen Deckel und Ventilteller. Diese Kräfte können ausreichen, um eine Laserschweißnaht, eine Elektronenschweißnaht oder eine Widerstandsschweißnaht zwischen dem Deckel und dem Ventilteller zu überlasten und zu zerstören. Durch die Entlastungsnuten kann der Randbereich des Deckels elastischer gestaltet werden. Bei einer Durchbiegung des Deckels nach innen, kann sich der Randbereich durchbiegen und die Belastung der Fügestelle am Rand kann deutlich verringert werden. Je nach Tiefe und Breite der Entlastungsnuten kann die Entlastung der Fügestellen entsprechend stark ausfallen. Auch wenn der vorliegende Deckel 20 durch die Leitschaufeln recht stabil und biegesteif ist, unterliegt er jedoch durch das Kühlmittel relativ starken thermischen Spannungen, die ebenfalls durch die Entlastungsnuten von der Fügestelle am Rand abgekoppelt werden können.

In Figur 7C ist nur eine Entlastungsnut 34 an der Außenseite des Deckels 20 vorgesehen. In Figur 7D ist nur eine Entlastungsnut 34 an der Innenseite des Deckels 20 vorgesehen. In Figuren 7C und 7D wurde jeweils die Spitze der kegelförmigen Struktur 26 abgeschnitten, um alle Figuren zusammen auf einer Seite unterbringen zu können.

Es sollte klar sein, dass hier sowohl innen als auch außen jeweils mehrere Entlastungsnuten eingesetzt werden können, um die Elastizität am Rand des Deckels 20 zu erhöhen. Es ist ebenfalls vorgesehen alle einzelnen Merkmale der Figuren zu weiteren Ausführungsformen zu kombinieren. So können beispielsweise die Leitschaufeln des Deckels mit entsprechenden wendelförmigen Leitschaufeln in dem Ventilschaft kombiniert werden. Es ist ebenfalls möglich, die wendelförmigen Leitschaufeln in dem Ventilschaft mit einem Deckel zu kombinieren, der mit Entlastungsnuten 34 versehen ist. Es ist zudem vorgesehen eine Leitschaufel in dem Ventilschaft anzuordnen, die ein sich nach oben, in Richtung Ventilschaftende bewegendes Kühlmittel, in eine Rotationsströmung um eine Ventilachse versetzt. Es kann ebenfalls vorgesehen sein die wendelförmigen Leitschaufeln vor einem oberen Ende des Ventilschafts enden zu lassen, um eine Rotationsströmung nahe dem Schaftende möglichst wenig zu stören.

### Bezugszeichenliste

- 2: innengekühltes Ventil gemäß des Standes der Technik
- 4: erfindungsgemäßes innengekühltes Ventil
- 6: Ventilteller
- 8: Ventilschaft
- 10: Hohlraum
- 12: Kühlmittel
- 14: Leitschaufeln für das Kühlmittel
- 16: wendelförmige Leitschaufeln für das Kühlmittel
- 18: Öffnung
- 20: Deckel
- 22: Ventiltellerfläche
- 24: Ventilteller-Rückseite
- 26: kegelförmige Struktur
- 28: Teil des Ventils mit Durchgangsöffnung
- 30: Durchgangsöffnung
- 32: Fügestelle
- 34: Entlastungsnut
- 36: Schaftende

## Patentansprüche

1. Innengekühltes Ventil (4) für Verbrennungsmotoren, umfassend einen Ventilteller (6), einen Ventilschaft (8), sowie einen Hohlraum (10) innerhalb des Ventilschafts (8) und des Ventiltellers (6), und ein Kühlmittel (12), das in dem Hohlraum (10) angeordnet ist, wobei der Hohlraum (10) mit mindestens einer Leitschaufel (14, 16) für das Kühlmittel (12) versehen ist, **dadurch gekennzeichnet, dass** die mindestens eine Leitschaufel (14, 16) einen dreieckigen Querschnitt aufweist.

2. Innengekühltes Ventil (4) für Verbrennungsmotoren, gemäß Anspruch 1, wobei das Kühlmittel (12) Natrium ist.

3. Innengekühltes Ventil (4) für Verbrennungsmotoren, gemäß Anspruch 1 oder 2, wobei das Ventil mindestens zweiteilig ist und an der Ventiltellerfläche (22) eine Öffnung (18) aufweist, die mit einem Deckel (20) verschlossen ist.

4. Innengekühltes Ventil (4) für Verbrennungsmotoren, gemäß Anspruch 3, **dadurch gekennzeichnet, dass** der Deckel (20) mit der mindestens einen Leitschaufel (14, 16) für das Kühlmittel (12) versehen ist.

5. Innengekühltes Ventil (4) für Verbrennungsmotoren, gemäß Anspruch 4, **dadurch gekennzeichnet, dass** der Deckel (20) mindestens zwei Leitschaufeln (14, 16) umfasst, die sich symmetrisch und spiralförmig von einer Mitte des Deckels (20) nach außen erstrecken.

6. Innengekühltes Ventil (4) für Verbrennungsmotoren, gemäß einem der vorstehenden Ansprüche 3 bis 5, **dadurch gekennzeichnet, dass** der Deckel (20) eine kegelförmige Struktur (26) in der Mitte umfasst, um das Kühlmittel (12) auf die Leitschaufeln (14, 16) zu leiten.

7. Innengekühltes Ventil (4) für Verbrennungsmotoren, gemäß einem der vorstehenden Ansprüche, **dadurch gekennzeichnet, dass** die mindestens eine Leitschaufel (14, 16) jeweils eine Höhe aufweist, die kleiner ist als die Hälfte der Höhe des Hohlraums (10) für das Kühlmittel (12).

8. Innengekühltes Ventil (4) für Verbrennungsmotoren, gemäß Anspruch 1 oder 6, **dadurch gekennzeichnet, dass** eine Seite der mindestens einen Leitschaufel (14, 16) senkrecht zu der Tellerfläche verläuft.

9. Innengekühltes Ventil (4) für Verbrennungsmotoren, gemäß einem der vorstehenden Ansprüche, **dadurch gekennzeichnet, dass** die mindestens eine Leitschaufel (16) wendelförmig in dem Schaft verläuft.

10. Innengekühltes Ventil (4) für Verbrennungsmotoren gemäß Anspruch 9, **dadurch gekennzeichnet, dass** eine Seitenfläche der mindestens einen wendelförmigen Leitschaufel (16) eine 6-mal größere Fläche aufweist, als eine andere Seite der mindestens einen wendelförmigen Leitschaufel (16).

11. Innengekühltes Ventil (4) für Verbrennungsmotoren, gemäß einem der vorstehenden Ansprüche, **dadurch gekennzeichnet, dass** der Ventilschaft (8) mehrteilig ausgeführt ist, wobei mindestens ein Teil (28) des Ventilschafts (8) eine Durchgangsöffnung (30) aufweist.

12. Innengekühltes Ventil (4) für Verbrennungsmotoren, gemäß einem der vorstehenden Ansprüche, **dadurch gekennzeichnet, dass** der Deckel (20) zusätzlich mit mindestens einer Entlastungsnut (34) versehen ist, die eine Fügestelle (32) zwischen der Öffnung (18), der Ventiltellerfläche (22) und dem Deckel (20) entlastet.

## Claims

1. An internally cooled valve (4) for internal combustion engines, comprising
a valve disc (6), a valve stem (8), and a cavity (10) inside the valve stem (8) and the valve disc (6), and a coolant (12), which is arranged in the cavity (10), wherein the cavity (10) is provided with at least one guide vane (14, 16) for the coolant (12), **characterized in that** the at least one guide vane (14, 16) has a triangular cross section.

2. The internally cooled valve (4) for internal combustion engines according to Claim 1, wherein the coolant (12) is sodium.

3. The internally cooled valve (4) for internal combustion engines according to Claim 1 or 2, wherein the valve is in at least two parts and has an opening (18) on the valve-disc surface (22), which is closed with a lid (20).

4. The internally cooled valve (4) for internal combustion engines according to Claim 3, **characterized in that** the lid (20) is provided with the at least one guide vane (14, 16) for the coolant (12).

5. The internally cooled valve (4) for internal combustion engines according to Claim 4, **characterized in that** the lid (20) comprises at least two guide vanes (14, 16), which extend symmetrically and spirally outwards from a centre of the lid (20).

6. The internally cooled valve (4) for internal combustion engines according to one of the preceding Claims 3 to 5, **characterized in that** the lid (20) comprises a conical structure (26) in the centre, in order to conduct the coolant (12) onto the guide vanes (14, 16).

7. The internally cooled valve (4) for internal combustion engines according to one of the preceding claims, **characterized in that** the at least one guide vane (14, 16) has a height in each case which is smaller than half of the height of the cavity (10) for the coolant (12).

8. The internally cooled valve (4) for internal combustion engines according to Claim 1 or 6, **characterized in that** one side of the at least one guide vane (14, 16) runs perpendicularly to the disc surface.

9. The internally cooled valve (4) for internal combustion engines according to one of the preceding claims, **characterized in that** the at least one guide vane (16) runs helically in the stem.

10. The internally cooled valve (4) for internal combustion engines according to Claim 9, **characterized in that** a side face of the at least one helical guide vane (16) has an area at least 6-times larger than another side of the at least one helical guide vane (16).

11. The internally cooled vale (4) for internal combustion engines according to one of the preceding claims, **characterized in that** the valve stem (8) is realized in multiple parts, wherein at least one part (28) of the valve stem (8) has a through opening (30).

12. The internally cooled valve (4) for internal combustion engines according to one of the preceding Claims 3 to 13, **characterized in that** the lid (20) is additionally provided with at least one relief groove (34), which relieves a joint (32) between the opening (18) of the valve disc surface (22) and the lid (20).

## Revendications

1. Soupape (4) à refroidissement interne pour moteurs à combustion interne, comprenant une tête de soupape (6), une tige de soupape (8), ainsi qu'une cavité (10) à l'intérieur de la tige de soupape (8) et de la tête de soupape (6), et un agent de refroidissement (12) disposé dans la cavité (10), la cavité (10) étant pourvue d'au moins une aube directrice (14, 16) pour l'agent de refroidissement (12), **caractérisée en ce que** ladite au moins une aube directrice (14, 16) a une section transversale triangulaire.

2. Soupape (4) à refroidissement interne pour moteurs à combustion interne selon la revendication 1, dans laquelle l'agent de refroidissement (12) est du sodium.

3. Soupape à refroidissement interne (4) pour moteurs à combustion interne selon la revendication 1 ou la revendication 2, dans laquelle la soupape est en au moins deux parties et présente une ouverture (18) sur la surface (22) de la tête de soupape qui est fermée par un couvercle (20).

4. Soupape (4) à refroidissement interne pour moteurs à combustion interne selon la revendication 3, **caractérisée en ce que** le couvercle (20) est pourvu de ladite au moins une aube directrice (14, 16) pour l'agent de refroidissement (12).

5. Soupape (4) à refroidissement interne pour moteurs à combustion interne selon la revendication 4, **caractérisée en ce que** le couvercle (20) comprend au moins deux aubes directrices (14, 16) qui s'étendent symétriquement et en spirale depuis un centre du couvercle (20) vers l'extérieur.

6. Soupape (4) à refroidissement interne pour moteurs à combustion interne selon l'une quelconque des revendications 3 à 5 précédentes, **caractérisée en ce que** le couvercle (20) comprend une structure (26) en forme de cône en son centre pour diriger l'agent de refroidissement (12) sur les aubes directrices (14, 16).

7. Soupape (4) à refroidissement interne pour moteurs à combustion interne selon l'une des revendications précédentes, **caractérisée en ce que** ladite au moins une aube directrice (14, 16) a une hauteur, laquelle hauteur est inférieure à la moitié de la hauteur de la cavité (10) pour l'agent de refroidissement (12).

8. Soupape (4) à refroidissement interne pour moteurs à combustion interne selon la revendication 1 ou la revendication 6, **caractérisée en ce qu'**un côté de ladite au moins une aube directrice (14, 16) s'étend de façon perpendiculaire à la surface de la tête.

9. Soupape (4) à refroidissement interne pour moteurs à combustion interne selon l'une des revendications précédentes, **caractérisée en ce que** ladite au moins une aube directrice (16) s'étend de manière hélicoïdale dans la tige.

10. Soupape (4) à refroidissement interne pour moteurs à combustion interne selon la revendication 9, **caractérisée en ce qu'**une surface latérale de ladite au moins une aube directrice hélicoïdale (16) a une surface 6 fois plus grande qu'un autre côté de ladite au moins une aube directrice hélicoïdale (16).

11. Soupape (4) à refroidissement interne pour moteurs à combustion interne selon l'une des revendications précédentes, **caractérisée en ce que** la tige de soupape (8) est réalisée en plusieurs parties, au moins une partie (28) de la tige de soupape (8) présentant une ouverture traversante (30).

12. Soupape (4) à refroidissement interne pour moteurs à combustion interne selon l'une des revendications précédentes, **caractérisée en ce que** le couvercle (20) est en outre pourvu d'au moins une rainure de déchargement (34) qui décharge un point de jonction (32) entre l'ouverture (18), la surface (22) de la tête de soupape et le couvercle (20).
